(19) Europäisches Patentamt

European Patent Office

Office européen des brevets

(11) **EP 2 460 682 A1**

(12) **DEMANDE DE BREVET EUROPEEN**

(43) Date de publication:
**06.06.2012 Bulletin 2012/23**

(51) Int Cl.:
**B60L 7/14** *(2006.01)* **B60L 7/16** *(2006.01)*
**H02P 3/18** *(2006.01)*

(21) Numéro de dépôt: **11188363.3**

(22) Date de dépôt: **09.11.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **06.12.2010 FR 1060105**

(71) Demandeur: **Schneider Toshiba Inverter Europe SAS**
**27120 Pacy sur Eure (FR)**

(72) Inventeurs:
• **Loizelet, Philippe**
  **27120 Le Plessis Hebert (FR)**
• **Boulharts, Hocine**
  **78510 Triel sur Seine (FR)**

(74) Mandataire: **Bié, Nicolas et al**
**Schneider Electric Industries SAS**
**Service Propriété Industrielle**
**35 rue Joseph Monier - CS 30323**
**92506 Rueil-Malmaison Cedex (FR)**

(54) **Dispositif de décharge rapide d'un condensateur**

(57) L'invention concerne un dispositif de décharge rapide d'un condensateur (C) comportant deux bornes (L1, L2, L10, L20) destinées à se connecter aux bornes du condensateur à décharger, ledit dispositif comportant :
- au moins deux résistances ($R_1$, $R_2$, $R_3$, $R_{10}$, $R_{20}$, $R_{30}$) ayant chacune une valeur déterminée,
- au moins deux interrupteurs ($S_1$, $S_2$, $S_3$, $S_{10}$, $S_{20}$, $S_{30}$), chaque interrupteur étant associé à une résistance distincte et agencé pour commander le passage ou non du courant à travers sa résistance associée,
- une unité de commande (10, 100) des deux interrupteurs actionnable lors d'une commande de décharge du condensateur (C).

Fig. 1

EP 2 460 682 A1

## Description

La présente invention se rapporte à un dispositif destiné à la décharge rapide d'un condensateur, plus particulièrement d'un super-condensateur ou ultra-condensateur (appelé "supercapacitor" ou "ultra-capacitor" en anglais).

Les super-condensateurs sont le plus souvent agencés dans une unité et connectés entre eux en série et/ou en parallèle pour accroître la tension d'utilisation et la capacité totale de stockage d'énergie.

L'emploi de super-condensateurs se répand dans des domaines très différents, tels que par exemple dans le domaine de la variation de vitesse où ils sont utilisés pour stocker l'énergie générée lors du freinage de la charge électrique connectée à un variateur de vitesse.

Dans les différentes applications des super-condensateurs, il s'avère aujourd'hui nécessaire de prévoir un dispositif de sécurité permettant de décharger rapidement les super-condensateurs et de pouvoir ainsi sécuriser rapidement l'application. Il faut pouvoir décharger rapidement une unité de super-condensateurs, en vue d'atteindre dans un temps déterminé, un niveau de tension suffisamment faible permettant de mettre le système en sécurité.

Aujourd'hui, pour décharger une unité de super-condensateurs, une résistance lui est connectée en parallèle afin de dissiper toute l'énergie stockée dans l'unité de super-condensateurs lorsque cette résistance est connectée aux super-condensateurs.

Une unité de super-condensateurs est en règle générale employée pour stocker des énergies très importantes. Une unité de super-condensateurs ayant par exemple une capacité supérieure à 1 F et chargée à plus de 100 V emmagasine une énergie supérieure à 10 kJ. La résistance de décharge employée devra donc être dimensionnée pour supporter une décharge supérieure à 10 kJ. La valeur de cette résistance déterminera alors le temps nécessaire pour atteindre un niveau de tension suffisamment bas synonyme de sécurité.

En utilisant ce principe de décharge à une seule résistance, on s'aperçoit que la résistance subit une forte contrainte au début de la décharge puisque le courant est alors à son maximum.

L'exemple ci-dessous permet d'illustrer cette affirmation :

Une unité de super-condensateurs de capacité valant 3 F, chargée à une tension de 600 V, doit être déchargée en 60 secondes pour atteindre une tension finale de 50 V.

Pour répondre à cet objectif, une résistance de 8 Ω au maximum doit être employée. Cette résistance doit alors être dimensionnée pour pouvoir supporter une énergie de 540 kJ. Pendant les toutes premières secondes, la résistance doit absorber une puissance supérieure à 40 kW. L'interrupteur de commande de la résistance, le câblage et la résistance doivent être dimensionnés pour supporter un courant crête de 75A.

Par cet exemple, on se rend compte que l'agencement proposé dans l'état de la technique est trop contraignant, notamment en terme de dimensionnement des composants.

Les documents De102008010980, US4545464 et JP2007312456 décrivent des dispositifs de décharge de condensateurs.

Le but de l'invention est de proposer un dispositif pour décharger rapidement un ou plusieurs condensateurs, par exemple de type super-condensateurs, qui soit fiable, économique et qui permette de réduire au maximum les contraintes électriques exercées sur les composants employés.

Ce but est atteint par un dispositif de décharge rapide d'un condensateur comportant deux bornes destinées à se connecter aux bornes du condensateur, ledit dispositif comportant :

- n résistances ayant chacune une valeur déterminée, n étant supérieur ou égal à deux,

- n interrupteurs, chaque interrupteur étant associé à une résistance distincte et agencé pour commander le passage ou non du courant à travers sa résistance associée,

- une unité de commande des n interrupteurs actionnable lors d'une commande de décharge du condensateur,

- l'unité de commande étant agencée pour appliquer une séquence de commande déterminée des n interrupteurs,

- les valeurs des n résistances et la séquence de commande étant déterminées dans le but de répartir de manière optimale les énergies et les puissances ou courants dans les n résistances.

Selon un premier mode de réalisation, les n résistances sont connectées en parallèle entre les deux bornes du dispositif et un interrupteur est connecté en série avec chaque résistance.

Selon un deuxième mode de réalisation, les n résistances sont connectées en série entre les deux bornes du dispositif, un interrupteur étant connecté en série avec les résistances et n-1 interrupteurs étant chacun connectés en parallèle d'une résistance.

Selon un troisième mode de réalisation, les n résistances sont connectées en série entre les deux bornes du dispositif et un interrupteur est connecté en parallèle de chaque résistance. Dans ce mode de réalisation, un interrupteur supplémentaire est alors connecté en série avec les résistances.

Selon l'invention, la séquence de commande comporte des instants de commutation de chaque interrupteur mémorisés ou calculés dans l'unité de commande, lesdits instants de commutation et les valeurs des n résistances étant chacun déterminés de manière à répartir de manière équitable l'énergie à dissiper dans les n résistances et à répartir de manière équitable les puissances crêtes absorbées par les n résistances.

Selon l'invention, les valeurs des n résistances sont différentes entre elles.

Selon l'invention, le dispositif est particulièrement adapté lorsque le condensateur à décharger est de type super-condensateur.

L'invention concerne également un variateur de vitesse connecté à une charge électrique et comportant un module de récupération de l'énergie générée lors du freinage de la charge électrique, ledit module comportant un ou plusieurs condensateurs destinés à stocker l'énergie générée lors du freinage de la charge électrique, le variateur étant caractérisé en ce qu'il comporte un dispositif de décharge rapide tel que défini ci-dessus.

D'autres caractéristiques et avantages vont apparaître dans la description détaillée qui suit en se référant à un mode de réalisation donné à titre d'exemple et représenté par les dessins annexés sur lesquels :

- la figure 1 représente un premier mode de réalisation du dispositif de décharge de l'invention,

- la figure 2 représente un deuxième mode de réalisation du dispositif de décharge de l'invention,

- la figure 3 illustre, par des courbes, la décharge d'un condensateur selon une première séquence de commande,

- la figure 4 illustre, par des courbes, la décharge d'un condensateur selon une deuxième séquence de commande.

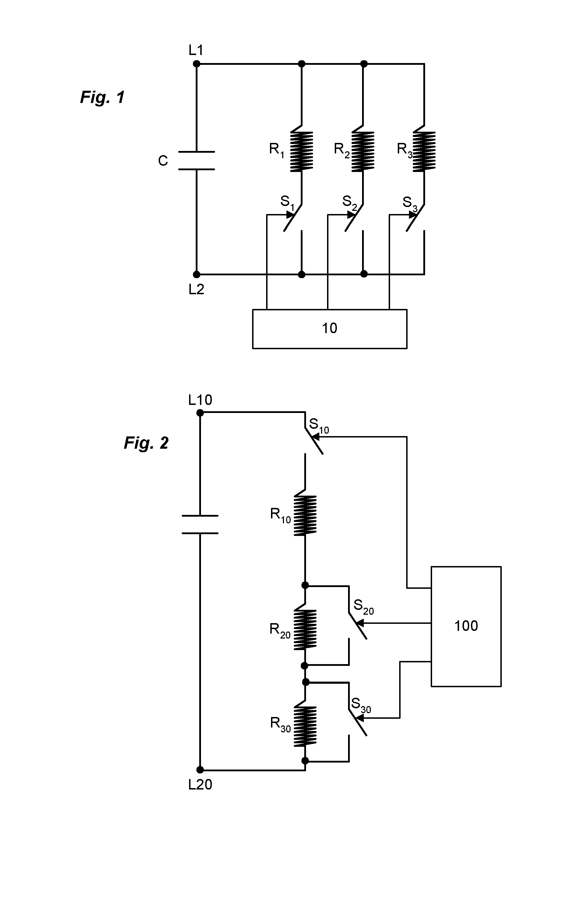

Le dispositif de l'invention est destiné à la décharge rapide d'un ou plusieurs condensateurs, par exemple un ou plusieurs super-condensateurs, par exemple organisés dans une unité de super-condensateurs. Sur les figures 1 et 2, l'ensemble des condensateurs ou super-condensateurs à décharger est représenté sous la forme d'un seul condensateur. Dans la suite de la description, nous parlerons d'un seul condensateur pour exprimer l'idée d'un ou plusieurs condensateurs ou super-condensateurs.

Selon l'invention, le dispositif de décharge rapide du condensateur comporte deux bornes L1, L2 (figure 1), L10, L20 (figure 2) entre lesquelles vient se connecter le condensateur C à décharger. Entre ses deux bornes, le dispositif comporte n résistances et n interrupteurs (avec n supérieur ou égal à deux), un interrupteur étant associé à une résistance. Chaque interrupteur est destiné à commander le passage ou non du courant à travers la résistance qui lui est associée. Les interrupteurs sont commandés par une unité de commande 10, 100 selon une séquence déterminée dans laquelle sont enregistrés les instants de commutation à la fermeture et/ou à l'ouverture de chaque interrupteur. Ces paramètres ainsi que les valeurs des résistances employées sont dépendants notamment de la valeur de tension initiale à décharger, de la capacité du condensateur à décharger, de la valeur de tension finale de mise en sécurité, du temps de décharge souhaité pour le condensateur et de contraintes que l'on souhaite imposer aux résistances. Par exemple, les contraintes à imposer peuvent être l'égalité entre les énergies dissipées par chaque résistance et l'égalité entre les puissances crêtes absorbées par chaque résistance. Ces contraintes peuvent également être liées aux courants crêtes ou courants moyens vus par chaque résistance ou aux puissances moyennes absorbées par chaque résistance. Ces contraintes conditionnent directement le choix des matériaux, dimensions et enveloppes de protection des résistances employées et impactent donc leur coût et le coût final du produit.

Selon l'invention, chaque interrupteur employé est par exemple un relais électromécanique commandé par un signal de commande envoyé par l'unité de commande 10, 100.

Dans un premier mode de réalisation, le dispositif de décharge rapide de l'invention comporte n résistances connectées en parallèle entre les deux bornes L1, L2 et n interrupteurs (avec n supérieur ou égal à deux), un interrupteur étant connecté en série avec chacune des résistances. La figure 1 montre un exemple de réalisation d'un dispositif de décharge rapide de ce type qui comporte trois résistances $R_1$, $R_2$, $R_3$ connectées en parallèle entre les deux bornes L1, L2 et un interrupteur $S_1$, $S_2$, $S_3$ connecté en série avec chaque résistance. Les interrupteurs sont de type normalement ouverts ou normalement fermés et sont chacun initialement ouverts. Pour réaliser la décharge du condensateur C, l'unité de commande 10 est destinée à commander les interrupteurs $S_1$, $S_2$, $S_3$ selon une séquence de commande déterminée. Une première séquence de commande peut consister à fermer puis ouvrir successivement chaque interrupteur $S_1$, $S_2$, $S_3$ pour connecter indépendamment chaque résistance $R_1$, $R_2$, $R_3$ au condensateur C. Une deuxième séquence de commande peut consister à fermer successivement chaque interrupteur $S_1$, $S_2$, $S_3$ et à maintenir fermé chaque interrupteur après sa fermeture. Les instants de commutation et les valeurs des résistances sont définis selon plusieurs contraintes imposées à l'unité de commande dans la répartition de la décharge du condensateur.

La première séquence de commande mise en oeuvre par l'unité de commande 10 est la suivante :

- à l'instant $t_0$, fermeture de $S_1$ pour connecter la résistance $R_1$ au condensateur C,

- à l'instant $t_1$, ouverture de $S_1$ pour déconnecter la

résistance $R_1$ du condensateur et fermeture de $S_2$ pour connecter la résistance $R_2$ au condensateur C,

- à l'instant $t_2$, ouverture de $S_2$ pour déconnecter la résistance $R_2$ du condensateur C et fermeture de $S_3$ pour connecter la résistance $R_3$ au condensateur C,

- maintien de $S_3$ à l'état fermé jusqu'à décharge complète du condensateur C.

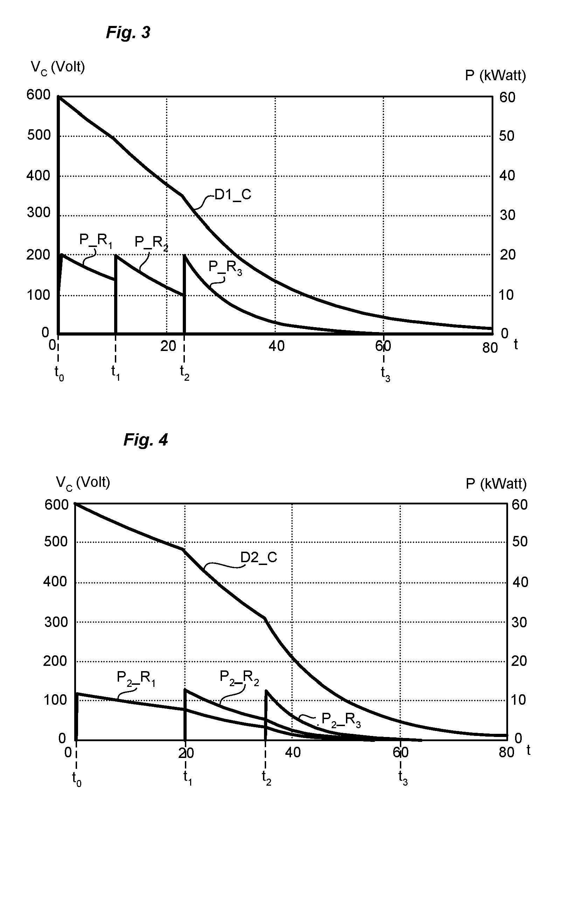

La figure 3 montre une courbe D1_C de décharge en tension d'un condensateur C selon cette première séquence de commande ainsi que les courbes P_$R_1$, P_$R_2$, P_$R_3$ représentant les puissances absorbées par chaque résistance $R_1$, $R_2$, $R_3$ lors de la décharge du condensateur C.

La deuxième séquence de commande qui pourrait être mise en oeuvre par l'unité de commande 10 comporte les étapes suivantes :

- à l'instant $t_0$, fermeture de $S_1$ pour connecter la résistance $R_1$ au condensateur C,

- à l'instant $t_1$, fermeture de $S_2$ pour connecter la résistance $R_2$ au condensateur C et maintien de $S_1$ à l'état fermé,

- à l'instant $t_2$, fermeture de $S_3$ pour connecter la résistance $R_3$ au condensateur C et maintien de $S_1$ et $S_2$ à l'état fermé,

- maintien de $S_1$, $S_2$ et $S_3$ à l'état fermé jusqu'à décharge complète du condensateur C.

La figure 4 montre une courbe D2_C de décharge en tension du condensateur C selon la deuxième séquence de commande décrite ci-dessus ainsi que les courbes P_2_$R_1$, P_2_$R_2$, P_2_$R_3$ représentant les puissances absorbées par chaque résistance $R_1$, $R_2$, $R_3$ lors de cette décharge.

Sur les figures 3 et 4, les courbes D1_C, D2_C représentent plus particulièrement la décharge en 60 secondes d'un condensateur C ayant une capacité de 3 F, d'une tension initiale de 600 V jusqu'à une tension finale de sécurité inférieure ou égale à 50 V.

Dans un deuxième mode de réalisation, le dispositif de décharge rapide comporte n résistances connectées en série entre les deux bornes L10, L20 et n ou n+1 interrupteurs (avec n supérieur ou égal à deux). La figure 2 montre une configuration de ce type avec trois résistances $R_{10}$, $R_{20}$, $R_{30}$ connectées en série, un interrupteur $S_{10}$ étant connecté en série avec toutes les résistances $R_{10}$, $R_{20}$, $R_{30}$ et deux interrupteurs $S_{20}$, $S_{30}$ étant connectés chacun en parallèle d'une résistance distincte $R_{20}$, $R_{30}$. Une variante de réalisation peut consister à rajouter un interrupteur en parallèle de la résistance $R_{10}$.

Pour réaliser la décharge du condensateur C, l'unité de commande 100 est destinée à commander les interrupteurs $S_{10}$, $S_{20}$, $S_{30}$ selon une séquence de commande déterminée. Cette séquence pourra être réalisée de manière à reproduire les deux séquences décrites ci-dessus pour le premier mode de réalisation. Comme dans le premier mode de réalisation décrit ci-dessus, les résistances peuvent être soustraites jusqu'à la décharge complète du condensateur C ou être mises en service individuellement l'une après l'autre jusqu'à la décharge complète du condensateur C.

En vue de déterminer les instants de commutation des interrupteurs, une première contrainte à imposer consiste par exemple à dissiper de manière équitable l'énergie dans les résistances. Une deuxième contrainte consiste par exemple à faire en sorte que chaque résistance absorbe une puissance crête équivalente.

En fixant ces deux contraintes, il est ainsi possible de déterminer une séquence de commande des interrupteurs et de fixer les valeurs optimales des résistances à employer dans le dispositif pour respecter cette séquence dans les conditions fixées. La démonstration ci-dessous permet d'illustrer cette affirmation. Cette démonstration est valable pour déterminer les paramètres de la première séquence de commande appliquée au premier mode de réalisation décrit ci-dessus.

Paramètres connus :

$V_0$ : tension initiale à décharger aux bornes du condensateur,

C : capacité du condensateur à décharger,

$V_3$ : Tension de sécurité à atteindre à un instant $t_3$.

Les paramètres à déterminer sont :

$t_1$ : instant de commutation à l'ouverture de l'interrupteur $S_1$ et à la fermeture de l'interrupteur $S_2$,

$t_2$ : instant de commutation à l'ouverture de l'interrupteur $S_2$ et à la fermeture de l'interrupteur $S_3$,

$R_1$, $R_2$, $R_3$ : valeurs des résistances employées.

Ce système est décrit par les équations suivantes :

$$V_1 = V_0 e^{(-t_1/T_1)}$$

$$V_2 = V_1 e^{(-(t_2-t_1)/T_2))}$$

$$V_3 = V_2 e^{(-(t_3-t_2)/T_3))}$$

$$E_{01} = E_0(1 - e^{(-2t_1/T_1)})$$

$$E_{12} = E_1(1 - e^{(-2(t_2-t_1)/T_2)})$$

$$E_{2\infty} = E_2$$

$V_1$ correspond à la tension aux bornes du condensateur C à l'instant $t_1$, $V_2$ correspond à la tension aux bornes du condensateur C à l'instant $t_2$ et $V_3$ correspond à la tension aux bornes du condensateur C à l'instant $t_3$.

Les paramètres $T_1, T_2, T_3$ correspondent aux constantes de temps des circuits RC formés par le condensateur et chacune des résistances $R_1$, $R_2$, $R_3$ et sont définis par les relations suivantes :

$$T_1 = R_1 C$$

$$T_2 = R_2 C$$

$$T_3 = R_3 C$$

$E_{01}, E_{12}, E_{2\infty}$ correspondent aux énergies dissipées respectivement entre l'instant initial $t_0$ et l'instant $t_1$, entre l'instant $t_1$ et l'instant $t_2$ et entre l'instant $t_2$ et l'instant final. Elles s'expriment à partir des énergies électrostatiques suivantes :

$$E_0 = \frac{1}{2}CV_0{}^2$$

$$E_1 = \frac{1}{2}CV_1{}^2$$

$$E_2 = \frac{1}{2}CV_2{}^2$$

La première contrainte consiste à fixer l'égalité entre les énergies dissipées par les résistances entre les instants $t_0$ et $t_1$, entre les instants $t_1$ et $t_2$, et entre les

instants $t_2$ et l'instant final. On a donc la relation suivante :

$$E_{01} = E_{12} = E_{2\infty} = E_0 / 3$$

On en déduit alors :

$$V_1 = \frac{\sqrt{2}}{\sqrt{3}}V_0$$

$$V_2 = \frac{1}{\sqrt{3}}V_0$$

$$t_1 = \frac{1}{2}T_1 \ln(3/2)$$

$$t_2 - t_1 = \frac{1}{2}T_2 \ln 2$$

$$t_3 - t_2 = T_3 \ln(V_0 / V_3 \cdot \sqrt{3})$$

La deuxième contrainte consiste à fixer l'équivalence entre les puissances crêtes absorbées par chaque résistance respectivement à $t_0$, à $t_1$ et à $t_2$, et définies par les relations suivantes :

$$P_{C\_0} = V_0{}^2 / R_1$$

$$P_{C\_1} = V_1{}^2 / R_2$$

$$P_{C\_2} = V_2{}^2 / R_3$$

Cela permet d'obtenir les relations suivantes :

$$R_1 = 3R_2 / 2 = 3R_3$$

$$T_1 = 3T_2/2 = 3T_3$$

$$T_2 = 2T_3$$

En considérant par exemple les données suivantes :

$$V_0 = 600 \text{ V}$$

$$C = 3 \text{ F}$$

$$V_3 = 50 \text{ V}$$

$$t_3 = 60 \text{ secondes}$$

On obtient les résultats suivants :

**Constantes de temps des filtres RC :**

$$T_1 = 56 \text{ secondes}$$

$$T_2 = 37 \text{ secondes}$$

$$T_3 = 19 \text{ secondes}$$

**Valeurs des résistances :**

$$R_1 = 18.5 \ \Omega$$

$$R_2 = 12.4 \ \Omega$$

$$R_3 = 6.2 \ \Omega$$

**Instants de commutation :**

$$t_1 = 11.3 \text{ secondes}$$

$$t_2 = 24.1 \text{ secondes}$$

**Energies dissipées par chaque résistance :**

$$E_0 = 540 \text{ kJ}$$

$$E_{01} = E_{12} = E_{23} = 180 \text{ kJ}$$

**Puissances crêtes absorbées par une résistance à $t_0$, $t_1$ et $t_2$ :**

$$P_{C\_0} = P_{C\_1} = P_{C\_2} = 19422 \text{ Watts}$$

**Courants crêtes supportés par une résistance à $t_0$, $t_1$ et $t_2$ :**

$$I_{C\_0} = 32 \text{ A}$$

$$I_{C\_1} = 40 \text{ A}$$

$$I_{C\_2} = 56 \text{ A}$$

**Puissance moyenne absorbée par chaque résistance, respectivement entre $t_0$ et $t_1$, entre $t_1$, et $t_2$ et entre $t_2$ et $t_3$ :**

$$P_{m\_01}=15967\ W$$

$$P_{m\_12}=14010\ W$$

$$P_{m\_23}=4855\ W$$

**Courant moyen circulant dans chaque résistance, respectivement entre $t_0$ et $t_1$, entre $t_1$, et $t_2$ et entre $t_2$ et $t_3$ :**

$$I_{m\_01}=29\ A$$

$$I_{m\_12}=34\ A$$

$$I_{m\_23}=18\ A$$

Le dispositif de décharge rapide de l'invention est par exemple adapté pour être inclus dans un variateur de vitesse connecté à une charge électrique et comportant un module de récupération de l'énergie générée lors du freinage de la charge électrique, ce module comportant une unité de super-condensateurs. Le dispositif de l'invention est actionné lorsque le module de récupération d'énergie doit être déchargé rapidement.

Il est bien entendu que l'on peut, sans sortir du cadre de l'invention, imaginer d'autres variantes et perfectionnements de détail et de même envisager l'emploi de moyens équivalents.

**Revendications**

1. Dispositif de décharge rapide d'un condensateur (C) comportant deux bornes (L1, L2, L10, L20) destinées à se connecter aux bornes du condensateur, ledit dispositif comportant :

    - n résistances ($R_1$, $R_2$, $R_3$, $R_{10}$, $R_{20}$, $R_{30}$) ayant chacune une valeur déterminée, n étant supérieur ou égal à deux,
    - n interrupteurs ($S_1$, $S_2$, $S_3$, $S_{10}$, $S_{20}$, $S_{30}$), chaque interrupteur étant associé à une résistance distincte et agencé pour commander le passage ou non du courant à travers sa résistance associée,
    - une unité de commande (10, 100) des n interrupteurs actionnable lors d'une commande de décharge du condensateur (C),

    **caractérisé en ce que** :

    - l'unité de commande (10, 100) est agencée pour appliquer une séquence de commande déterminée des n interrupteurs,
    - les valeurs des n résistances et la séquence de commande étant déterminées dans le but de répartir de manière optimale les énergies et les puissances ou courants à dissiper dans les n résistances,
    - la séquence de commande comportant des instants de commutation ($t_0$, $t_1$, $t_2$) de chaque interrupteur mémorisés ou calculés dans l'unité de commande (10, 100), lesdits instants de commutation ($t_0$, $t_1$, $t_2$) et les valeurs des n résistances étant chacun déterminés de manière à répartir équitablement l'énergie à dissiper dans les n résistances et à répartir équitablement les puissances crêtes absorbées par les n résistances.

2. Dispositif selon la revendication 1, **caractérisé en ce que** les n résistances ($R_1$, $R_2$, $R_3$) sont connectées en parallèle entre les deux bornes (L1, L2) du dispositif et **en ce qu'**un interrupteur ($S_1$, $S_2$, $S_3$) est connecté en série avec chaque résistance.

3. Dispositif selon la revendication 1, **caractérisé en ce que** les n résistances ($R_{10}$, $R_{20}$, $R_{30}$) sont connectées en série entre les deux bornes du dispositif, un interrupteur ($S_{10}$) étant connecté en série avec les résistances et les n-1 interrupteurs ($S_{20}$, $S_{30}$) étant chacun connectés en parallèle d'une résistance ($R_{20}$, $R_{30}$).

4. Dispositif selon la revendication 1, **caractérisé en ce que** les n résistances sont connectées en série entre les deux bornes (L10, L20) du dispositif et **en ce qu'**un interrupteur est connecté en parallèle de chaque résistance.

5. Dispositif selon la revendication 4, **caractérisé en ce qu'**un interrupteur est connecté en série avec les résistances.

6. Dispositif selon l'une des revendications 1 à 5, **caractérisé en ce que** les valeurs des n résistances sont différentes entre elles.

7. Dispositif selon l'une des revendications 1 à 6, **caractérisé en ce que** le condensateur est de type super-condensateur.

**8.** Variateur de vitesse connecté à une charge électrique et comportant un module de récupération de l'énergie générée lors du freinage de la charge électrique, ledit module comportant un ou plusieurs condensateurs destinés à stocker l'énergie générée lors du freinage de la charge électrique, le variateur étant **caractérisé en ce qu'**il comporte un dispositif de décharge rapide tel que défini dans l'une des revendications 1 à 7.

Fig. 1

Fig. 2

*Fig. 3*

*Fig. 4*

Europäisches
Patentamt

European
Patent Office

Office européen
des brevets

# RAPPORT DE RECHERCHE EUROPEENNE

Numéro de la demande

EP 11 18 8363

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | DE 10 2008 010980 A1 (BOSCH GMBH ROBERT [DE]) 27 août 2009 (2009-08-27)<br>* abrégé *<br>* alinéas [0003], [0006], [0007] *<br>* alinéas [0016], [0017]; figure 1 *<br>----- | 1,2,6-8 | INV.<br>B60L7/14<br>B60L7/16<br>H02P3/18 |
| X,D | JP 2007 312456 A (FUJI ELECTRIC HOLDINGS) 29 novembre 2007 (2007-11-29)<br>* figures 1-3 *<br>----- | 1,7,8 | |
| X,D | US 4 545 464 A (NOMURA MASAMI [JP]) 8 octobre 1985 (1985-10-08)<br>* colonne 5, ligne 15-39; figure 4 *<br>* colonne 2, ligne 29-45 *<br>----- | 1,8 | |

| DOMAINES TECHNIQUES RECHERCHES (IPC) |
|---|
| B60L<br>H02P |

Le présent rapport a été établi pour toutes les revendications

| Lieu de la recherche | Date d'achèvement de la recherche | Examinateur |
|---|---|---|
| La Haye | 20 avril 2012 | Marannino, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 8363

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2012

| Document brevet cité au rapport de recherche | Date de publication | Membre(s) de la famille de brevet(s) | | Date de publication |
|---|---|---|---|---|
| DE 102008010980 A1 | 27-08-2009 | DE | 102008010980 A1 | 27-08-2009 |
| | | EP | 2248239 A1 | 10-11-2010 |
| | | US | 2011093148 A1 | 21-04-2011 |
| | | WO | 2009106187 A1 | 03-09-2009 |
| JP 2007312456 A | 29-11-2007 | JP | 4853102 B2 | 11-01-2012 |
| | | JP | 2007312456 A | 29-11-2007 |
| US 4545464 A | 08-10-1985 | CA | 1208381 A1 | 22-07-1986 |
| | | JP | 1616253 C | 30-08-1991 |
| | | JP | 2031594 B | 13-07-1990 |
| | | JP | 58154380 A | 13-09-1983 |
| | | US | 4545464 A | 08-10-1985 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102008010980
- US 4545464 A
- JP 2007312456 B